(19) Europäisches Patentamt
European Patent Office
Office européen des brevets

(11) EP 2 648 911 B1

(12) **EUROPEAN PATENT SPECIFICATION**

(45) Date of publication and mention
of the grant of the patent:
**25.01.2017 Bulletin 2017/04**

(21) Application number: **11804838.8**

(22) Date of filing: **08.12.2011**

(51) Int Cl.:
**B32B 27/32** (2006.01)   **C08L 23/00** (2006.01)
**C08L 71/02** (2006.01)

(86) International application number:
**PCT/US2011/063864**

(87) International publication number:
**WO 2012/078829 (14.06.2012 Gazette 2012/24)**

(54) **FILMS WITH IMPROVED COEFFICIENT OF FRICTION**

FILME MIT VERBESSERTEM REIBUNGSKOEFFIZIENT

FILMS AYANT UN COEFFICIENT DE FRICTION AMÉLIORÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.12.2010 US 421659 P**

(43) Date of publication of application:
**16.10.2013 Bulletin 2013/42**

(73) Proprietor: **Dow Global Technologies LLC
Midland, MI 48674 (US)**

(72) Inventors:
• **SAVARGAONKAR, Nilesh R.
Pearland, TX 77584 (US)**
• **PHAM, Hoang T.
Lake Jackson, TX 77566 (US)**

(74) Representative: **Boult Wade Tennant
Verulam Gardens
70 Gray's Inn Road
London WC1X 8BT (GB)**

(56) References cited:
**EP-A1- 0 526 117      EP-A2- 0 095 299
WO-A1-98/10928       WO-A1-2005/077663
US-A- 2 978 431       US-B1- 6 503 637**

**Description**

BACKGROUND OF THE INVENTION

Low density olefin-based resins, such as ethylene/$\alpha$-olefin resins, need to have stable slip properties to be used in food and specialty films applications. The use of conventional fatty amides, such as erucamide, work reasonably well for a limited time period. However, over time the coefficient of friction (COF) of these films can change. Also, the COF is typically not consistent with respect to the length of manufactured film. This inconsistent COF affects post fabrication processes, such as the unwinding of the film rolls, and the processing of such films on vertical form fill seal equipment. Thus, there is a need for films configurations with consistent COF. In addition, for polyethylene films that are converted on a vertical, form, fill and seal (VFFS) type machines, there is a need to maintain low COF on the sealant side of the film for good performance on a VFFS machine. Many of such sealant films are adhesively laminated to a biaxially oriented polyester or biaxially oriented polypropylene films. It is particularly important to maintain low COF on the sealant side of such laminated structures.

US-B-6,503,637 relates to films comprising metallocene polyethylene, polypropylene, and free radically high pressure produced polymers.

EP-A-95,299 discloses a multi-layer film comprising a laminate having at least two layers each of which is formed by melt extrusion from a synthetic thermoplastics material, and wherein a first one of said layers comprises a blend of linear low density ethylene polymer and at least one of (a) a second ethylene polymer which has a higher density and is selected from ethylene homopolymers and copolymers of ethylene and at least one other $\alpha$-olefin and (b) poly-propylene and a second one of said layers comprises linear low density ethylene polymer, at least one of said layers provides a face of said film and at least a part of the surface of one face has a higher surface coefficient of friction than the other face of the film.

European Patent Application No. 0526117A1 discloses an additive composition for polyolefins, and which comprises a synthetic silica as an antiblocking agent, a slip agent, and an alkylene polyether. The alkylene polyether is preferably present in the composition in an amount from 200 to 1,500 ppm. It is preferred to premix the alkylene polyether in the liquid state with the silica before adding to the composition. There is also disclosed an extrudable polymer composition comprising the additive composition, and a film made from said extrudable polyolefin.

U.S. Patent 4533509 discloses a composite oriented structure having at least one thin surface layer, containing a highly subdivided inorganic material in an antiblock and coefficient of friction reducing proportion. The thin layer is formed simultaneously, or sequentially, on a comparatively thick base layer, and thereafter oriented.

U.S. Publication No. 2005/0070644 discloses a polymer process aid (PPA) for reducing melt defects in extruded polyethylene, in the absence of fluoropolymers. The PPA is disclosed as very effective for the reduction of extruder pressures. The PPA is disclosed as functioning especially well for the extrusion of linear low density polyethylene.

U.S. Patent 4551509 discloses a process for producing ethylene polymers or ethylene copolymers, comprising the following steps: (a) continuously polymerizing ethylene, or ethylene and an $\alpha$-olefin, in a reaction mixture, at a pressure of at least 300 kg/cm$^2$ and a temperature of at least 130°C, in the presence of a catalyst; and (b) adding a polyalkylene glycol to the reaction mixture to deactivate the catalyst. The catalyst is composed of a compound of a transition metal of groups IVa and VIa of the Periodic Table, and an organometallic compound of a metal of groups I to III of the Periodic Table.

U.S. Patent 2978431 discloses polyethylene compositions having a lower coefficient of friction. This patent discloses a homogeneous composition of consisting essentially of a normally solid polyethylene and from 0.005% to 0.5%, by weight of the polyethylene, of a polypropylene glycol monoalkyl ether represented by the general formula: CH3(CH3)xO(CH2C(CH3)HO)nH, wherein x represents an integer having a value of from 0 to 6, and n represents an integer having a value of from 12 to 52. This patent discloses other compositions containing other types of glycols.

There remains a need for films configurations that have consistent COF over time and consistent COF over the length of a film roll. There also is a need for laminated films that maintain low COF on the sealant side of such laminated films, for good processability on a VFFS machine. These needs have been met by the following invention.

SUMMARY OF THE INVENTION

The invention provides a film comprising at least two layers, Layer A and Layer B, and wherein Layer A is formed from a Composition A comprising the following:

    i) an olefin-based polymer
    ii) at least one polyalkylene-oxide selected from the group consisting of the following:

        a) EOxPOyEOz, where x is from 1 to 50, y is from 1 to 100, and z is from 1 to 50;

b) POxEOyPOz, where x is from 1 to 100, y is from 1 to 50, and z is from 1 to 100; and
c) combinations thereof; and

wherein the Layer B is formed from Composition B comprising an olefin-based polymer.

The invention also provides a laminated film comprising a film and a substrate, and wherein the film comprises at least one Layer A formed from a Composition A comprising the following:

i) an olefin-based polymer; and
ii) at least one polyalkylene-oxide selected from the group consisting of the following:

a) EOxPOyEOz, where x is from 1 to 50, y is from 1 to 100, and z is from 1 to 50;
b) POxEOyPOz, where x is from 1 to 100, y is from 1 to 50, and z is from 1 to 100; and
c) combinations thereof; and

wherein the substrate comprises a polyester, a polyamide, an olefin-based polymer, or a combination thereof.

BRIEF DESCRIPTION OF THE DRAWINGS

Figure 1 depicts the "dynamic COF versus time" for several inventive and comparative films.
Figure 2 depicts the "dynamic COF versus time" for several inventive and comparative films.

DETAILED DESCRIPTION OF THE INVENTION

As discussed above, in one aspect, the invention provides a film comprising at least two layers, Layer A and Layer B, and wherein Layer A is formed from a Composition A comprising the following:

i) an olefin-based polymer;
ii) at least one polyalkylene-oxide selected from the group consisting of the following:

a) EOxPOyEOz, where x is from 1 to 50, or from 2 to 40; y is from 1 to 100, or from 10 to 80; and z is from 1 to 50, or from 2 to 40;
b) POxEOyPOz, where x is from 1 to 100, or from 10 to 80; y is from 1 to 50, or from 2 to 40; and z is from 1 to 100, or from 10 to 80; and
c) combinations thereof; and

wherein the Layer B is formed from Composition B comprising an olefin-based polymer.
In another aspect, the invention also provides a laminated film comprising a film and a substrate, and wherein the film comprises at least one Layer A formed from a Composition A comprising the following:

i) an olefin-based polymer,
ii) at least one polyalkylene-oxide selected from the group consisting of the following:

a) EOxPOyEOz, where x is from 1 to 50, or from 2 to 40; y is from 1 to 100, or from 10 to 80; and z is from 1 to 50, or from 2 to 40;
b) POxEOyPOz, where x is from 1 to 100, or from 10 to 80; y is from 1 to 50, or from 2 to 40; and z is from 1 to 100, or from 10 to 80; and
c) combinations thereof; and

wherein the substrate comprises a polyester, a polyamide, an olefin-based polymer, or a combination thereof. In a further embodiment, the substrate comprises a biaxially oriented polyester, a PET, a polyamide, or a biaxially oriented PP. In a further embodiment, the substrate is a film.
In one embodiment, the laminated substrate has a thickness from 10 to 50 μm (microns). In a further embodiment, the substrate is a film.
The following embodiments apply to all aspects of the invention as described above, where applicable.
An inventive film may comprise a combination of two or more embodiments as described herein.
An inventive laminated film may comprise a combination of two or more embodiments as described herein.

In one embodiment, x equals z for each of the polyalkylene-oxides EOxPOyEOz and POxEOyPOz.

The at least one polyalkylene-oxide is selected from the group consisting of the following:

a) EOxPOyEOz, where x is from 1 to 50, or from 2 to 40; y is from 1 to 100, or from 10 to 80; and z is from 1 to 50, or from 2 to 40;
b) POxEOyPOz, where x is from 1 to 100, or from 10 to 80; y is from 1 to 50, or from 2 to 40; and z is from 1 to 100, or from 10 to 80; and
c) combinations thereof; and

In a further embodiment, x equals z for each of the polyalkylene-oxides EOxPOyEOx and POxEOyPOz.

In one embodiment, the at least one polyalkylene-oxide is selected from the following:

a) EOxPOyEOz, where x is from 1 to 50, or from 2 to 40; y is from 1 to 100, or from 10 to 80; and z is from 1 to 50, or from 2 to 40. In a further embodiment, x equals z.

In one embodiment, the at least one polyalkylene-oxide is selected from the following:

b) POxEOyPOz, where x is from 1 to 100, or from 10 to 80, y is from 1 to 50, or from 2 to 40, and z is from 1 to 100, or from 10 to 80. In a further embodiment, x equals z.

In one embodiment, the polyalkylene-oxide of component ii) has a molar ratio of "PO groups" to "EO groups" from 1 to 15, or from 1.5 to 9.5.

In one embodiment, the polyalkylene-oxide of component ii) has a molar ratio of "PO groups" to "EO groups" from 1.2 to 10, or from 1.5 to 5.

In one embodiment, the polyalkylene-oxide of Component ii) is present in an amount from 1 ppm to 5000 ppm, preferably from 100 to 2500 ppm, more preferably from 500 to 1000 ppm.

In one embodiment, Composition A further comprises an amide. In a further embodiment, the amide is selected from the group consisting of the following:

(1) Primary Amides: $R_1$-CO-$NH_2$, where $R_1 = C_xH_y$, where x = 8-30 and y = 15-61, or x = 12-25 and y = 23-49;
(2) Secondary Amides: $R_1$-CO-NH-$R_2$, where $R_1$ and $R_2 = C_xH_y$, where x = 8-30 and y = 15-61, or x = 12-25 and y = 23-49;
(3) Ethylene Bis-Amides: $R_1$-CO-NH-$CH_2$-$CH_2$- $R_2$ where $R_1$ and $R_2 = C_xH_y$, where x = 8-30 and y = 15-61, or x = 12-25 and y = 23-49; and
(4) combinations thereof.

In one embodiment, the amide is selected from the group consisting of the following:

(1) Primary Amides: $R_1$-CO-$NH_2$, where $R_1 = C_xH_y$, where x = 8-30 and y = 15-61, or x = 12-25 and y = 23-49;
(2) Secondary Amides: $R_1$-CO-NH-$R_2$, where $R_1$ and $R_2 = C_xH_y$, where x = 8-30 and y = 15-61, or x = 12-25 and y = 23-49; and
(4) combinations thereof.

In one embodiment, the amide is selected from the group consisting of the following:

(1) Primary Amides: $R_1$-CO-$NH_2$, where $R_1 = C_xH_y$, where x = 8-30 and y = 15-61, or x = 12-25 and y = 23-49;
(3) Ethylene Bis-Amides: $R_1$-CO-NH-$CH_2$- $CH_2$- $R_2$ where $R_1$ and $R_2 = C_xH_y$, where x = 8-30 and y = 15-61, or x = 12-25 and y = 23-49; and
(4) combinations thereof.

In one embodiment, the amide is selected from the group consisting of the following:

(2) Secondary Amides: $R_1$-CO-NH-$R_2$, where $R_1$ and $R_2 = C_xH_y$, where x = 8-30 and y = 15-61, or x = 12-25 and y = 23-49;
(3) Ethylene Bis-Amides: $R_1$-CO-NH-$CH_2$- $CH_2$- $R_2$ where $R_1$ and $R_2 = C_xH_y$, where x = 8-30 and y = 15-61, or x = 12-25 and y = 23-49; and
(4) combinations thereof.

In one embodiment, the amide is selected from the group consisting of the following:

(1) Primary Amides: $R_1$-CO-NH$_2$, where $R_1 = C_xH_y$, where x = 8-30 and y = 15-61, or x = 12-25 and y = 23-49.

In one embodiment, the amide is selected from the group consisting of the following:

(2) Secondary Amides: $R_1$-CO-NH-$R_2$, where $R_1$ and $R_2 = C_xH_y$, where x = 8-30 and y = 15-61, or x = 12-25 and y = 23-49.

In one embodiment, the amide is selected from the group consisting of the following:

(3) Ethylene Bis-Amides: $R_1$-CO-NH-CH$_2$- CH$_2$- $R_2$ where $R_1$ and $R_2 = C_xH_y$, where x = 8-30 and y = 15-61, or x = 12-25 and y = 23-49.

In one embodiment, the amide is selected from erucamide, oleamide, or a combination thereof.

In one embodiment, the weight ratio of the amide to the polyalkylene-oxide is from 1 to 10, or from 1.2 to 5.0.

In one embodiment, Composition A comprises greater than, or equal to, 1800 ppm, or greater than, or equal to, 2000 ppm, or greater than, or equal to, 2200 ppm of an antiblock, based on the weight of Composition A. In a further embodiment, the antiblock is selected from silica or talc.

In one embodiment, Composition A comprises less than, or equal to, 10000 ppm, or less than, or equal to, 9000 ppm, or less than, or equal to, 8000 ppm of an antiblock, based on the weight of Composition A. In a further embodiment, the antiblock is selected from silica or talc.

In one embodiment, Composition A comprises the following:

from 1 to 5000 ppm of the polyalkylene-oxide,
from 0 to 10000 ppm of the amide,
from 0 to 20,000 ppm of an anti-blocks, such as silica or talc, and
from 100 to 3000 ppm of anti-oxidant, such as a hindered phenolic or phosphate, and wherein each "ppm' is based on the weight of the composition.

In one embodiment, the olefin-based polymer of Component i) is an ethylene-based polymer.

In one embodiment the ethylene-based polymer (Component i)) has a density from 0.85 to 0.94 g/cc, or from 0.86 to 0.93 g/cc (1 cc = 1 cm$^3$).

In one embodiment the ethylene-based polymer (Component i)) has a melt index (I2) from 0.05 to 50 g/10 min, or from 0.1 to 20 g/10 min, or from 0.5 to 10 g/10 min.

In one embodiment the ethylene-based polymer (Component i) is a heterogeneously branched ethylene/$\alpha$-olefin interpolymer. In a further embodiment, the $\alpha$-olefin is a C3-C10 $\alpha$-olefin. In a further embodiment, the $\alpha$-olefin is selected from propylene, 1-butene, 1-hexene, or 1-octene.

In one embodiment the ethylene-based polymer (Component i) is a homogeneously branched linear ethylene/$\alpha$-olefin interpolymer. In a further embodiment, the $\alpha$-olefin is a C3-C10 $\alpha$-olefin. In a further embodiment, the $\alpha$-olefin is selected from propylene, 1-butene, 1-hexene, or 1-octene.

In one embodiment the ethylene-based polymer (Component i) is a homogeneously branched substantially linear ethylene/$\alpha$-olefin interpolymer. In a further embodiment, the $\alpha$-olefin is a C3-C10 $\alpha$-olefin. In a further embodiment, the $\alpha$-olefin is selected from propylene, 1-butene, 1-hexene, or 1-octene.

Composition A may comprise a combination of two or more embodiments as described herein.

The olefin-based polymer (for example, the ethylene-based polymer) of Composition A may comprise a combination of two or more embodiments as described herein.

In one embodiment, the olefin-based polymer of Composition B is an ethylene-based polymer.

In one embodiment, the ethylene-based polymer (Composition B) has a density from 0.85 to 0.94 g/cc, or from 0.86 to 0.93 g/cc (1 cc = 1 cm$^3$).

In one embodiment the ethylene-based polymer (Composition B) has a melt index (I2) from 0.05 to 50 g/10 min, or from 0.1 to 20 g/10 min, or from 0.5 to 10 g/10 min.

In one embodiment the ethylene-based polymer (Composition B) is a heterogeneously branched ethylene/$\alpha$-olefin interpolymer. In a further embodiment, the $\alpha$-olefin is a C3-C10 $\alpha$-olefin. In a further embodiment, the $\alpha$-olefin is selected from propylene, 1-butene, 1-hexene, or 1-octene.

In one embodiment, the ethylene-based polymer (Composition B) is a low density polyethylene (LDPE).

In one embodiment, Composition B does not comprise a polyalkylene-oxide.

In one embodiment, Composition B does not comprise an amide.

Composition B may comprise a combination of two or more embodiments as described herein.

The olefin-based polymer (for example, the ethylene-based polymer) of Composition B may comprise a combination of two or more embodiments as described herein.

In one embodiment, the film consists of two layers A and B.

In one embodiment, the film comprises from 10 to 40 percent Layer A, and from 90 to 60 percent Layer B, where each percentage is based on the total thickness of the film.

In one embodiment, the film further comprises a third Layer C.

In one embodiment, Layer C is formed from Composition C, which comprises an olefin-based polymer.

In one embodiment, the ethylene-based polymer (Composition C) has a density from 0.85 to 0.94 g/cc, or from 0.86 to 0.93 g/cc (1 cc = 1 cm$^3$).

In one embodiment the ethylene-based polymer (Composition C) has a melt index (I2) from 0.05 to 50 g/10 min, or from 0.1 to 20 g/10 min, or from 0.5 to 10 g/10 min.

In one embodiment the ethylene-based polymer (Composition C) is a heterogeneously branched ethylene/$\alpha$-olefin interpolymer. In a further embodiment, the $\alpha$-olefin is a C3-C10 $\alpha$-olefin. In a further embodiment, the $\alpha$-olefin is selected from propylene, 1-butene, 1-hexene, or 1-octene.

Composition C may comprise a combination of two or more embodiments as described herein.

The olefin-based polymer (for example, the ethylene-based polymer) of Composition C may comprise a combination of two or more embodiments as described herein.

In one embodiment, Layer C is located between Layer A and Layer B.

In one embodiment, Layer A is an exterior layer.

In one embodiment, Layer B is an exterior layer.

In one embodiment, Layer C is a core layer.

In one embodiment, the thickness of Layer C is greater than the thickness of Layer A.

In one embodiment, the thickness of Layer C is at least 2x the thickness of Layer A.

In one embodiment, the film comprises from 10 to 30 percent, or from 15 to 25 percent Layer A, from 10 to 30 percent, or from 15 to 25 percent Layer B, and from 40 to 80 percent, or from 50 to 70 percent Layer C; where each percentage is based on the total thickness of the film.

In one embodiment, the film consists of three layers A, B and C.

In one embodiment, the film has a thickness from 25.4 to 127 $\mu$m (1 to 5 mils), or from 25.4 to 76.2 $\mu$m (1 to 3 mils).

In one embodiment, the film is a blown film.

The invention also provides an article comprising at least one component formed from an inventive film.

In one embodiment, the article is a laminated film.

The invention also provides an article comprising at least one component formed from an inventive laminated film.

An inventive film may comprise a combination of two or more embodiments as described herein.

An inventive laminated film may comprise a combination of two or more embodiments as described herein.

An inventive article may comprise a combination of two or more embodiments as described herein.

**Olefin-based Polymers**

Olefin-based polymers include ethylene-based polymers and propylene-based polymers.

Suitable olefin-based polymers include, but are not limited to ENGAGE Polyolefin Elastomers, ATTANE Polyethylene Resins, AFFINITY Polyolefin Plastomers, DOWLEX Polyethylene Resins, ELITE Polyethylene Resins, and VERSIFY Elastomers and Plastomers; each available from The Dow Chemical Company; EXCEED and EXACT polymers available from ExxonMobil Chemical Company; TAFMER polymers available from the Mitsui Chemical Company; VISTAMAXX polymers available from ExxonMobil Chemical Co.; LICOCENE polymers available from Clariant; EASTOFLEX polymers available from Eastman Chemical Co.; REXTAC polymers available from Hunstman; and VESTOPLAST polymers available from Degussa.

**Ethylene-based Polymers**

Suitable ethylene-base polymers include, for example, heterogeneously branched linear ethylene polymers (e.g., linear low density polyethylene (LLDPE)), homogeneously branched linear ethylene polymers, and homogeneously branched substantially linear ethylene polymers (that is homogeneously branched, long chain branched ethylene polymers), and low density polyethylene (LDPE).

In one embodiment, the ethylene is copolymerized with one or more comonomers, and preferably one comonomer. Comonomers include, but are not limited to, propylene, isobutylene, 1-butene, 1-pentene, 1-hexene, 3-methyl-1-pentene, 4-methyl-1-pentene, and 1-octene, non-conjugated dienes, polyenes, butadienes, isoprenes, pentadienes, hexadienes (for example, 1,4-hexadiene), octadienes, styrene, halo-substituted styrene, alkylsubstituted styrene, tetrafluoroethylenes, vinylbenzocyclobutene, naphthenics, cycloalkenes (for example, cyclopentene, cyclohexene, cyclooctene), and mixtures thereof. Typically and preferably, the ethylene is copolymerized with one $C_3$-$C_{20}$ $\alpha$-olefin, and preferably one C3-C10 $\alpha$-olefin. Preferred comonomers include propene, 1-butene, 1-pentene, 1-hexene, 1-heptene and 1-octene, and more preferably include propene, 1-butene, 1-hexene and 1-octene.

Illustrative interpolymers include ethylene/propylene (EP) copolymers, ethylene/butene (EB) copolymers, ethylene/hexene (EH) copolymers, ethylene/octene (EO) copolymers, ethylene/$\alpha$-olefin/diene modified (EAODM) interpolymers, such as ethylene/propylene/diene modified (EPDM) interpolymers and ethylene/propylene/octene terpolymers. Preferred copolymers include EP, EB, EH and EO copolymers.

In one embodiment, the ethylene-based polymer has a density greater than, or equal to, 0.850 g/cc, preferably greater than, or equal to, 0.855 g/cc, more preferably greater than, or equal to, 0.860 g/cc.

In one embodiment, the ethylene-based polymer has a density less than, or equal to, 0.940 g/cc, preferably less than, or equal to, 0.935 g/cc, more preferably less than, or equal to, 0.930 g/cc.

In one embodiment, the ethylene-based polymer has a melt index (I2) greater than, or equal to, 0.05 g/10 min, preferably greater than, or equal to, 0.1 g/10 min, more preferably greater than, or equal to, 0.5 g/10 min.

In one embodiment, the ethylene-based polymer has a melt index (I2) less than, or equal to, 50 g/10 min, preferably less than, or equal to, 20 g/10 min, more preferably less than, or equal to, 10 g/10 min.

In one embodiment, the ethylene-based polymer is a heterogeneously branched linear ethylene/$\alpha$-olefin interpolymer, and preferably a copolymer. Some $\alpha$-olefins are discussed above.

Heterogeneously branched linear ethylene polymers are characterized by little, if any, long chain branching, in contrast to conventional LDPE. The processes for producing LLDPE are well known in the art, and commercial grades of this polyolefin resin are available. Generally, LLDPE is produced in gas-phase fluidized bed reactors or liquid phase solution process reactors, using a Ziegler-Natta catalyst system.

Heterogeneously branched linear ethylene-based interpolymers differ from the homogeneously branched ethylene-based interpolymers, primarily in their comonomer branching distribution. For example, heterogeneously branched interpolymers have a branching distribution, in which the polymer molecules do not have the same comonomer-to-ethylene ratio. Heterogeneously branched ethylene-based interpolymers are typically prepared with a Ziegler/Natta catalyst system. These linear interpolymers lack long chain branching (or measureable amounts of long chain branching).

Heterogeneously branched ethylene-based interpolymers include, but are not limited to, linear medium density polyethylene (LMDPE), linear low density polyethylene (LLDPE), very low density polyethylene (VLDPE), and ultra low density polyethylene (ULDPE). Commercial polymers include DOWLEX polymers, ATTANE polymer and FLEXOMER polymers (all from The DOW Chemical Company).

In one embodiment, the heterogeneously branched linear ethylene/$\alpha$-olefin interpolymer, and preferably copolymer, has an 110/12 melt index ratio from 5 to 11, or from 6 to 10, or from 7 to 9.

In one embodiment, the ethylene-based polymer is a homogeneously branched linear ethylene/$\alpha$-olefin interpolymer, and preferably a copolymer; or a homogeneous branched substantially linear ethylene/$\alpha$-olefin interpolymer, and preferably a copolymer. Some $\alpha$-olefins are discussed above.

In one embodiment, the ethylene-based polymer is a homogeneously branched linear ethylene/$\alpha$-olefin interpolymer, and preferably a copolymer. Some $\alpha$-olefins are discussed above.

In one embodiment, the ethylene-based polymer is homogeneous branched substantially linear ethylene/$\alpha$-olefin interpolymer, and preferably a copolymer. Some $\alpha$-olefins are discussed above.

The terms "homogeneous" and "homogeneously-branched" are used in reference to an ethylene/$\alpha$-olefin interpolymer, in which the $\alpha$-olefin comonomer is randomly distributed within a given polymer molecule, and all of the polymer molecules have the same or substantially the same comonomer-to-ethylene ratio.

The homogeneously branched linear ethylene interpolymers are ethylene polymers, which lack long chain branching, but do have short chain branches, derived from the comonomer polymerized into the interpolymer, and which are homogeneously distributed, both within the same polymer chain, and between different polymer chains. These ethylene/$\alpha$-olefin interpolymers have a linear polymer backbone, no measurable long chain branching, and a narrow molecular weight distribution. This class of polymers is disclosed for example, by Elston in US Patent No. 3,645,992, and subsequent processes to produce such polymers, using bis-metallocene catalysts, have been developed, as shown, for example, in EP 0 129 368; EP 0 260 999; US Patent No. 4,701,432; US Patent No. 4,937,301; US Patent No. 4,935,397; US Patent No. 5,055,438; and WO 90/07526.

As discussed, the homogeneously branched linear ethylene interpolymers lack long chain branching (or measurable amounts of long chain branching), just as is the case for the linear low density polyethylene polymers or linear high density polyethylene polymers, made using uniform branching distribution polymerization processes. Commercial examples of homogeneously branched linear ethylene/$\alpha$-olefin interpolymers include TAFMER polymers supplied by the Mitsui Chemical Company, and EXACT polymers supplied by ExxonMobil Chemical Company.

The homogeneously branched substantially linear ethylene/$\alpha$-olefin interpolymers are described in US Patent Nos. 5,272,236; 5,278,272; 6,054,544; 6,335,410 and 6,723,810. The substantially linear ethylene/α-olefin interpolymers have long chain branching. The long chain branches have the same comonomer distribution as the polymer backbone, and can have about the same length as the length of the polymer backbone. "Substantially linear," typically, is in reference to a polymer that is substituted, on average, with "0.01 long chain branches per 1000 carbons" to "3 long chain branches per 1000 carbons." The length of a long chain branch is longer than the carbon length of a short chain branch, formed from the incorporation of one comonomer into the polymer backbone.

The homogeneously branched substantially linear ethylene/α-olefin interpolymers form a unique class of homogeneously branched ethylene polymers. They differ substantially from the well-known class of conventional, homogeneously branched linear ethylene/α-olefin interpolymers, as discussed above, and, moreover, they are not in the same class as conventional heterogeneous "Ziegler-Natta catalyst polymerized" linear ethylene polymers (for example, ultra low density polyethylene (ULDPE), linear low density polyethylene (LLDPE) or high density polyethylene (HDPE) made, for example, using the technique disclosed by Anderson et al., in U.S. Patent 4,076,698); nor are they in the same class as high pressure, free-radical initiated, highly branched polyethylenes, such as, for example, low density polyethylene (LDPE), ethylene-acrylic acid (EAA) copolymers, and ethylene vinyl acetate (EVA) copolymers.

The homogeneously branched, substantially linear ethylene/α-olefin interpolymers have excellent processability, even though they have a relatively narrow molecular weight distribution. Surprisingly, the melt flow ratio ($I_{10}/I_2$), according to ASTM D 1238, of the substantially linear ethylene interpolymers can be varied widely, and essentially independently of the molecular weight distribution (Mw/Mn or MWD). This surprising behavior is contrary to conventional homogeneously branched linear ethylene interpolymers, such as those described, for example, by Elston in U.S. 3,645,992, and heterogeneously branched conventional "Ziegler-Natta polymerized" linear polyethylene interpolymers, such as those described, for example, by Anderson et al., in U.S. 4,076,698. Unlike substantially linear ethylene interpolymers, linear ethylene interpolymers (whether homogeneously or heterogeneously branched) have rheological properties, such that, as the molecular weight distribution increases, the $I_{10}/I_2$ value also increases.

Long chain branching can be determined by using $^{13}$C Nuclear Magnetic Resonance (NMR) spectroscopy, and can be quantified using the method of Randall (Rev. Macromol. Chem. Phys., C29 (2 &3), 1989, p. 285-297). Two other methods are Gel Permeation Chromatography, couple with a Low Angle Laser Light Scattering detector (GPCLALLS), and Gel Permeation Chromatography, coupled with a Differential Viscometer detector (GPC-DV). The use of these techniques for long chain branch detection, and the underlying theories, have been well documented in the literature. See, for example, Zimm, B.H. and Stockmayer, W.H.,J. Chem. Phys., 17,1301(1949) and Rudin, A., Modern Methods of Polymer Characterization, John Wiley & Sons, New York (1991) pp. 103-112.

The homogeneous branched ethylene polymers will preferably have a single melting peak, as measured using Differential Scanning Calorimetry (DSC), in contrast to heterogeneously branched linear ethylene polymers, which have two or more melting peaks, due to the heterogeneously branched polymer's broad branching distribution.

In one embodiment, the ethylene/α-olefin interpolymer has a PRR from 4 to 70, preferably from 8 to 70. In a further embodiment, the ethylene/α-olefin interpolymer has a PRR from 12 to 60, or from 15 to 55, or from 18 to 50. In a further embodiment, the ethylene/α-olefin interpolymer is an ethylene/α-olefin copolymer.

Interpolymer viscosity is conveniently measured in poise (dyne-second/square centimeter (d-sec/cm2)) at shear rates within a range of 0.1-100 radian per second (rad/sec), at 190°C, under a nitrogen atmosphere, using a dynamic mechanical spectrometer (such as a RMS-800 or ARES from Rheometrics), under a dynamic sweep made from 0.1 to 100 rad/sec. The viscosities at 0.1 rad/sec and 100 rad/sec may be represented, respectively, as "V0.1" and "V100," with a ratio of the two referred to as "RR," and expressed as "V0.1/V100," and measured at 190°C.

The PRR value is calculated by the formula:

```
PRR = RR + [3.82 - interpolymer Mooney Viscosity (ML1+4 at
125°C)] x 0.3.
```

The PRR determination is described in US Patent 6,680,361 (see also equivalent WO 00/26268).

Some commercial ethylene/α-olefin interpolymers have PRR values less than 3. In one embodiment, the ethylene/α-olefin interpolymer has a PRR less than 3, or less than 2. In another embodiment, the ethylene/α-olefin interpolymer has a PRR from -1 to 3, or from 0.5 to 3, or from 1 to 3. In a further embodiment, the ethylene/α-olefin interpolymer is an ethylene/α-olefin copolymer. Some α-olefins are discussed above.

An ethylene-based polymer may comprise a combination of two or more embodiments as described herein.

The ethylene/α-olefin interpolymer may comprise a combination of two or more embodiments as described herein.

The ethylene/α-olefin copolymer may comprise a combination of two or more embodiments as described herein.

**Polyalkylene Oxides**

Polyalkylene oxides include the following.

EOxPOyEOz, where x is from 1 to 50, or from 2 to 40, or from 5 to 20; y is from 1 to 100, or from 10 to 80, or from 15 to 50; and z is from 1 to 50, or from 2 to 40, or from 5 to 20; and in a further embodiment, x = z; and

POxEOyPOz, where x is from 1 to 100, or from 10 to 80, or from 5 to 20; y is from 1 to 50, or from 2 to 40, or from 15 to 50; and z is from 1 to 100, or from 10 to 80, or from 5 to 20; and in a further embodiment, x = z.

The EO represents ethylene oxide, and the PO represents propylene oxide. It is noted in the formulas above, that each polyalkylene oxide is typically encapped (although not shown above) at a terminal end with a hydrogen atom (to provide a terminal OH).

The x, y and z values represent the average value of each respective repeat unit.

The values of x, y, and z are typically determined based on molecular weight. Molecular weight can be measured via ASTM Method D4274, which is the method for determining hydroxyl number. In a batch process (no solvents), the molecular weight of the intermediate (for example, a PO block) is measured, and then, the EO is added, and the molecular weight of the polymer is measured again, after the EO is added.

Molecular weight -- ASTM D 4274. The polymer is mixed with phthalic anhydride solution (3080 ml pyridine, 500 grams phthalic anhydride, 75 grams imidazole) to form a polymer solution (amounts of polymer and phthalic anhydride solution are based on estimated number average molecular weight of polymer). The polymer solution is heated in a 100°C water bath, for a minimum of 20 minutes, but not more than 45 minutes, and then titrated with standardized "1.0 N NaOH" using a Mettler DL-55 Titrator. At the titration point, the number of moles of OH end groups can be calculated, and the number average molecular weight of the polymer block under investigation can be determined from the moles of OH and the moles of respective monomer(s) added to the reaction. NMR can also be used to determine alkylene oxide ratios, for example, EO / PO ratios.

Suitable examples of alkylene oxides include, but are not limited to, the POLOXAMER block polymers available from The Dow Chemical Company, and PLURONIC polymers available from BASF.

**Amides**

Amides include, but are not limited to, the following:

(1) Primary Amides: R1-CO-NH2 where R1 = CxHy, where x = 8-30 and y = 15-61, or x = 12-25 and y = 23-49;
(2) Secondary Amides: R1-CO-NH-R2 where R1 and R2 = CxHy, where x = 8-30 and y = 15-61, or x = 12-25 and y = 23-49; and
(3) Ethylene Bis-Amides: R1-CO-NH-CH2- CH2- R2 where R1 and R2 = CxHy, where x = 8-30 and y = 15-61, or x = 12-25 and y = 23-49.

**Additives**

A composition may comprise at least one additive. Additives include, but are not limited to, ultraviolet light absorbers, antistatic agents, pigments, dyes, nucleating agents, fillers, fire retardants, plasticizers, and anti-blocking agents.

Polymers and resins used in the invention are typically treated with one or more stabilizers, for example, antioxidants, such as IRGANOX 1010 and IRGAFOS 168, both supplied by Ciba Specialty Chemicals. Polymers are typically treated with one or more stabilizers before an extrusion or other melt processes.

**Some Multilayered Films**

In one embodiment, the film comprises at least three layers, Layer A, Layer B and Layer C. Further embodiments are shown below in Tables 1-5. In each of the layers (A, B, C) in Tables 1-5, a low density polyethylene (LDPE) may be independently added to the polymer composition used to form each layer.

Table 1

| Layer A | Layer C | Layer B |
|---|---|---|
| Exterior layer | Core layer | Exterior Layer |
| Olefin-based polymer | Olefin-based polymer | Olefin-based polymer |
| Polyalkylene oxide | Optional polyalkylene oxide | No polyalkylene oxide |

(continued)

| Layer A | Layer C | Layer B |
|---|---|---|
| Amide | Amide | No Amide |

Table 2

| Layer A | Layer C | Layer B |
|---|---|---|
| Exterior layer | Core layer | Exterior Layer |
| ethylene-based polymer | ethylene-based polymer | ethylene-based polymer |
| Polyalkylene oxide | no polyalkylene oxide | No polyalkylene oxide |
| Amide | Amide | No Amide |

Table 3

| Layer A | Layer C | Layer B |
|---|---|---|
| Exterior layer | Core layer | Exterior Layer |
| ethylene-based polymer | ethylene-based polymer | ethylene-based polymer |
| Polyalkylene oxide | polyalkylene oxide | No polyalkylene oxide |
| Amide | Amide | No Amide |

Table 4

| Layer A | Layer C | Layer B |
|---|---|---|
| Exterior layer | Core layer | Exterior Layer |
| Heterogeneously branched ethylene/$\alpha$-olefin interpolymer | Heterogeneously branched ethylene/$\alpha$-olefin interpolymer | Heterogeneously branched ethylene/$\alpha$-olefin interpolymer |
| Polyalkylene oxide | No polyalkylene oxide | No polyalkylene oxide |
| Amide | Amide | No Amide |

Table 5

| Layer A | Layer C | Layer B |
|---|---|---|
| Exterior layer | Core layer | Exterior Laver |
| Heterogeneously branched ethylene/$\alpha$-olefin interpolymer | Heterogeneously branched ethylene/$\alpha$-olefin interpolymer | Heterogeneously branched ethylene/$\alpha$-olefin interpolymer |
| Polyalkylene oxide | polyalkylene oxide | No polyalkylene oxide |
| Amide | Amide | No Amide |

**Processes for Forming Films of the Invention**

A film of the invention can be prepared by selecting the polymers suitable for making each layer; forming a film of each layer, and bonding the layers, or coextruding or casting one or more layers. Desirably, the film layers are bonded continuously over the interfacial area between films. Preferably the film is formed using a blown film process.

For each layer, typically, it is suitable to extrusion blend the polymer components and any additional additives, such as slip, anti-block, and polymer processing aids. The extrusion blending should be carried out in a manner, such that an adequate degree of dispersion is achieved. The parameters of extrusion blending will necessarily vary depending upon the components. However, typically the total polymer deformation, that is, mixing degree, is important, and is controlled by, for example, the screw-design and the melt temperature. The melt temperature during film forming will depend on the film components.

After extrusion blending, a film structure is formed. Film structures may be made by conventional fabrication techniques, for example, blown films, bubble extrusion, biaxial orientation processes (such as tenter frames or double bubble processes), cast/sheet extrusion, coextrusion and lamination. Conventional bubble extrusion processes (also known as hot blown film processes) are described, for example, in The Encyclopedia of Chemical Technology, Kirk-Othmer, Third Edition, John Wiley & Sons, New York, 1981, Vol. 16, pp. 416-417 and Vol. 18, pp. 191-192. Biaxial orientation film manufacturing processes, such as described in the "double bubble" process of U.S.-A-Patent No. 3,456,044 (Pahlke), and the processes described in U.S.-A-Patent No. 4,352,849 (Mueller), U.S.-A-Patent Nos. 4,820,557 and 4,837,084 (both to Warren), U.S.-A-Patent No. 4,865,902 (Golike et al.), U.S.-A-Patent No. 4,927,708 (Herran et al.), U.S.-A-Patent No. 4.952,451 (Mueller), and U.S.-A-Patent Nos. 4,963,419 and 5,059,481 (both to Lustig et al.), can also be used to make the novel film structures of this invention.

The films of the aforementioned processes may be made to any thickness depending upon the application. Typically, the multilayered films have a thickness less than, or equal to 1000 $\mu$m (microns), or less than, or equal to, 500 $\mu$m (microns), or less than, or equal to 100 $\mu$m (microns). In a preferred embodiment, the films have a total thickness from 5 to 300 $\mu$m (microns), or from 20 to 200 $\mu$m (microns), or from 40 to 100 $\mu$m (microns). The permeability of the film may also be adjusted depending upon the application.

DEFINITIONS

The term "multilayered film," as used herein, refers to a film structure with more than one layer or ply.

The term "film," as used herein, refers to a film structure with at least one layer or ply. The inventive films, as described herein, contain at least two layers or plies. The inventive laminated substrates, as described herein, contain at least one layer or ply. A film layer or ply may comprise one or more "extrusion layers," formed from the same polymer composition.

The term "core layer" or "inner layer," as used herein, refer to an interior film layer that is co-contiguous with another film layer on each surface.

The terms "skin" or "skin layer," or "outer layer," as used herein, refers to an outermost, exterior film layer.

The terms "blend" or "polymer blend," as used herein, mean a blend of two or more polymers. Such a blend may or may not be miscible (not phase separated at molecular level). Such a blend may or may not be phase separated. Such a blend may or may not contain one or more domain configurations, as determined from transmission electron spectroscopy, light scattering, x-ray scattering, and other methods known in the art.

The term "composition," as used herein, includes a mixture of materials which comprise the composition, as well as reaction products and decomposition products formed from the materials of the composition.

The term "polymer," as used herein, refers to a polymeric compound prepared by polymerizing monomers, whether of the same or a different type. The generic term polymer thus embraces the term homopolymer (employed to refer to polymers prepared from only one type of monomer, with the understanding that trace amounts of imparities can be incorporated into the polymer structure), and the term interpolymer as defined hereinafter.

The term "interpolymer," as used herein, refers to polymers prepared by the polymerization of at least two different types of monomers. The generic term interpolymer thus includes copolymers (employed to refer to polymers prepared from two different types of monomers), and polymers prepared from more than two different types of monomers.

The term, "olefin-based polymer," as used herein, refers to a polymer that comprises, in polymerized form, a majority amount of olefin monomer, for example ethylene or propylene (based on the weight of the polymer), and optionally may comprise one or more comonomers.

The term, "ethylene-based polymer," as used herein, refers to a polymer that comprises, in polymerized form, a majority amount of ethylene monomer (based on the weight of the polymer), and optionally may comprise one or more comonomers.

The term, "ethylene/$\alpha$-olefin interpolymer," as used herein, refers to an interpolymer that comprises, in polymerized form, a majority amount of ethylene monomer (based on the weight of the interpolymer), and at least one $\alpha$-olefin.

The term, "ethylene/$\alpha$-olefin copolymer," as used herein, refers to a copolymer that comprises, in polymerized form, a majority amount of ethylene monomer (based on the weight of the copolymer), and an $\alpha$-olefin, as the only two monomer types.

The term, "propylene-based polymer," as used herein, refers to a polymer that comprises, in polymerized form, a majority amount of propylene monomer (based on the weight of the polymer), and optionally may comprise one or more comonomers.

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

TEST METHODS

Polymer density is measured in accordance with ASTM D-792-08.

*Melt Index*

Melt index (I2) of an ethylene-based polymer is measured in accordance with ASTM D-1238-04, condition 190°C/2.16 kg. Melt index (I5) of an ethylene-based polymer is measured in accordance with ASTM D-1238-04, condition 190°C/5.0 kg. Melt index (I10) of an ethylene-based polymer is measured in accordance with ASTM D-1238-04, condition 190°C/10.0 kg. High load melt index (I21) of an ethylene-based polymer is measured in accordance with ASTM D-1238-04, condition 190°C/21.0 kg. For propylene-based polymers, the melt flow rate (MFR) is measured in accordance with ASTM D-1238-04, condition 230°C/2.16 kg.

*Differential Scanning Calorimetry (DSC)*

Differential Scanning Calorimetry (DSC) is used to measure crystallinity in ethylene-based (PE) polymers (or samples) and propylene-based (PP) polymers (or samples). A sample is pressed (177°C (350°F), 10.5 MPa (1500 psi), about 15 seconds) into a thin film at a temperature of 190°C. 5 to 8 mg of film sample is weighed and placed in a DSC pan. The lid is crimped on the pan to ensure a closed atmosphere. The sample pan is placed in a DSC cell, and then heated, at a rate of approximately 10°C/min, to a temperature of 180°C for PE (230°C for PP). The sample is kept at this temperature for five minutes. Then the sample is cooled at a rate of 10°C/min to typically -40°C (or if needed, -60°C for some PE polymers), and kept isothermally at that temperature for five minutes. The sample is next heated (second heat) at a rate of 10°C/min, until complete melting (around 150°C for PE). The percent crystallinity is calculated by dividing the heat of fusion ($H_f$), determined from the second heat curve, by a theoretical heat of fusion of 292 J/g for PE (165 J/g, for PP), and multiplying this quantity by 100 (for example, % cryst. = ($H_f$ / 292 J/g) x 100 (for PE)).
Unless otherwise stated, melting point(s) ($T_m$) of each polymer is determined from the second heat curve, and the crystallization temperature ($T_c$) is determined from the first cooling curve.

*Mooney Viscosity of Polymer*

Polymer Mooney Viscosity (ML1+4 at 125°C) is measured in accordance with ASTM 1646-04, with a one minute preheat time and a four minute rotor operation time. The instrument is an Alpha Technologies Rheometer MDR 2000.

*Gel Permeation Chromatography (GPC)*

Polymer molecular weight is characterized by high temperature, triple detector Gel Permeation Chromatography (3D-GPC). The chromatographic system consists of a Polymer Laboratories (Amherst, MA, now part of Varian, Inc, Shropshire, UK) "PL-GPC 210" high temperature chromatograph, equipped with a concentration detector (RI), a Precision Detectors (Amherst, MA) 2-angle laser light scattering detector, Model 2040, and a 4-capillary differential viscometer detector, Model 220, from Viscotek (Houston, TX). The 15° angle of the light scattering detector is used for calculation purposes.
Data collection is performed using VISCOTEK TriSEC software version 3 and a 4-channel VISCOTEK Data Manager DM400. The system is equipped with an on-line ERC-3415α four channel degasser system from ERC Inc (Tokyo, JP). The carousel compartment is operated at 150°C for polyethylene and 85°C for EPDM, and the column compartment is operated at 150°C. The columns are four Polymer Lab Mix-A 30 cm, 20 micron columns. The polymer solutions are prepared in 1,2,4-trichlorobenzene (TCB). The samples are prepared at a concentration of 0.1 grams of polymer in 50 ml of TCB. The chromatographic solvent and the sample preparation solvent contain 200 ppm of butylated hydroxytoluene (BHT). Both solvent sources are nitrogen purged. Polyethylene samples are stirred gently at 160°C for four hours. EPDM samples are stirred gently at 160°C for one hour. For carbon black containing samples, carbon black is removed by a "one-time filtration" that is performed at 150°C, under a nitrogen pressurized flow through a pre-heated layer of PERLITE in a ceramic filter. The injection volume is 200 μl, and the flow rate is 1.0 ml/minute.

Calibration of the GPC column set is performed with 21 narrow, molecular weight distribution polystyrene standards. The molecular weights of the standards range from 580 to 8,400,000, and are arranged in 6 "cocktail" mixtures, with at least a decade of separation between individual molecular weights.

The polystyrene standard peak molecular weights are converted to polyethylene molecular weights using the following equation (as described in Williams and Ward, J. Polym. Sci., Polym. Let., 6, 621 (1968)): Mpolyethylene = A x (Mpolystyrene)[B] (1A), where M is the molecular weight, A has a value of 0.39 and B is equal to 1.0. A fourth order polynomial is used to fit the respective polyethylene-equivalent calibration points.

The total plate count of the GPC column set is performed with EICOSANE (prepared at 0.04 g in 50 milliliters of TCB, and dissolved for 20 minutes with gentle agitation.) The plate count and symmetry are measured on a 200 microliter injection according to the following equations:

$$\text{PlateCount} = 5.54 * (\text{RV at Peak Maximum} / (\text{Peak width at } \tfrac{1}{2} \text{ height}))\,^\wedge 2 \quad (2A),$$

where RV is the retention volume in milliliters, and the peak width is in milliliters.

$$\text{Symmetry} = (\text{Rear peak width at one tenth height - RV at Peak Maximum}) / (\text{RV at Peak Maximum - Front peak width at one tenth height}) \quad (3A),$$

where RV is the retention volume in milliliters, and the peak width is in milliliters. The Systematic Approach for the determination of multi-detector offsets is done in a manner consistent with that published by Balke, Mourey, et. al (Mourey and Balke, Chromatography Polym. Chpt. 12, (1992)) (Balke, Thitiratsakul, Lew, Cheung, Mourey, Chromatography Polym. Chpt. 13, (1992)). Optimizing dual detector, log molecular weight results from a broad polyethylene of 115,000 to the narrow standard column calibration results, from the narrow standards calibration curve, is done using in-house software. The molecular weight data for off-set determination was obtained in a manner consistent with that published by Zimm (Zimm, B.H., J.Chem. Phys., 16, 1099 (1948)) and Kratochvil (Kratochvil, P., Classical Light Scattering from Polymer Solutions, Elsevier, Oxford, NY (1987)). The overall injected concentration, used for the determination of the molecular weight, is obtained from the sample refractive index, increment area, and the RI detector calibration from a linear polyethylene homopolymer of 115,000 Dalton molecular weight. The refractive index increment ($dn/dc$) for polyethylene is -0.104 mL/g and $dn/dc$ for EODM is -0.094 mL/g. The chromatographic concentrations are assumed low enough to eliminate addressing 2nd Virial coefficient effects (concentration effects on molecular weight).

The calculations of Mn, Mw, and Mz based on GPC (conventional (conv) GPC for Mn, Mw and Mz) results using the RI detector are determined from the following equations:

$$\overline{Mn} = \frac{\sum\limits_{i} RI_i}{\sum\limits_{i}\left( RI_i \middle/ M_{calibration_i} \right)} \quad (4A),$$

$$\overline{Mw} = \frac{\sum\limits_{i}\left( RI_i * Mcal_i \right)}{\sum\limits_{i} RI_i} \quad (5A),$$

$$\overline{Mz} = \frac{\sum\limits_{i}\left( RI_i * Mcal^2_i \right)}{\sum\limits_{i}\left( RI_i * Mcal_i \right)} \quad (6A).$$

Another form of molecular weight average is the viscosity average which can be calculated using Equation 7A:

$$\overline{Mz} = \left( \frac{\sum\limits^{i} \left( RI_i * Mcal_i^{\ \alpha+1} \right)}{\sum (RI_i)} \right)^{1/\alpha} \tag{7A},$$

where $\alpha$ is a material dependent parameter which relates the intrinsic viscosity ($[\eta]$) to the molecular weight of the polymer.

In addition to the above calculations, a set of alternative values [Mw(abs), Mz(abs), Mz (BB) and MZ+1 (BB)] values are also calculated with the method proposed by Yau and Gillespie, Polymer, 42, 8947-8958 (2001), and determined from the following equations:

$$\overline{Mw}(abs) = K_{LS} * \frac{\sum\limits^{i} (LS_i)}{\sum\limits^{i} (IR_i)} \tag{8A},$$

where, $K_{LS}$ = LS-MW calibration constant,

$$\overline{Mz}(abs) = \frac{\sum\limits^{i} RI_i * (LS_i / RI_i)^2}{\sum\limits^{i} RI_i * (LS_i / RI_i)} \tag{9A},$$

$$\overline{Mz}(BB) = \frac{\sum\limits^{i} (LS_i * Mcalibration_i)}{\sum\limits^{i} (LS_i)} \tag{10A},$$

$$\overline{M_{z+1}}(BB) = \frac{\sum\limits^{i} \left( LS_i * Mcalibration_i^{\ 2} \right)}{\sum\limits^{i} \left( LS_i * Mcalibration_i \right)} \tag{11A},$$

where $LS_i$ is the 15 degree LS signal, and the Mcalibration uses equation 1A, and the LS detector alignment is as described previously.

In order to monitor the deviations over time, which may contain an elution component (caused by chromatographic changes) and a flow rate component (caused by pump changes), a late eluting narrow peak is generally used as a "flow rate marker peak." A flow rate marker is therefore established based on the air peak in TCB, or a drop of decane flow marker dissolved in the eluting sample prepared in TCB. Flow rate marker is used to linearly correct the flow rate for all samples, by alignment of the air peaks or decane peaks. Any changes in the time of the marker peak are then assumed to be related to a linear shift in both flow rate and chromatographic slope.

The plate count for the chromatographic system (based on EICOSANE as discussed previously) should be greater than 22,000, and symmetry should be between 1.00 and 1.12.

Off-Line COF Testing Procedure per ASTM D1894

The film specimens was conditioned at 23°C and 50% relative humidity for at least 40 hrs, prior to starting the testing. The film specimen (250 x 130 mm (or 10 x 5 inch)) was taped to the long slide of the apparatus with the machine direction of the specimen in the 250 mm direction. The specimen was smoothed to remove wrinkles if necessary, while taking care not to alter the film surface with finger oils etc.. The film specimen (120 x 120 mm (or 4.5 x 4.5 inch)) was taped to the back of the square shaped sled. The machine direction of the specimen was kept parallel to the length of the sled. The driving mechanism (which had been previously adjusted to run at a speed of 150 $\pm$ 30 mm/min. or 6 $\pm$ 1.2 in/min.) was initiated, and the initial maximum reading was recorded as the frictional force component of the static coefficient of friction. The average force reading during a run of approximately 130 mm (5 in.) was recorded, while the surfaces were sliding smoothly over one another. This was equivalent to the kinetic force required to sustain motion between the two surface, and was usually lower than the initial static force. After the sled traveled the 130 mm (5 in.) distance, the apparatus was stopped and returned to the starting position. The film specimens were removed from the sled and the slide and discarded. The apparatus was prepared ready for the next set of specimens. The static and kinetic frictional force readings for at least 3 to 5 specimens were recorded, and the average value taken.

Unless noted to the contrary, all parts and percentages are by weight.

EXPERIMENTAL

The following polymers were used in the examples below.

EO 80G: ethylene/octene copolymer with a density of 0.902 g/cm3, and a melt index (I2) of 1 g/10 min (190°C/16 kg). Homogeneously branched, substantially linear.
No slip or anti-block added to this resin.

EO 81G: ethylene/octene copolymer with a density of 0.902 g/cm3, and a melt index (I2) of 1 g/10 min (190°C/16 kg), formulated with slip and anti-block.
Homogeneously branched, substantially linear.

EO 68G: linear low density ethylene/octene copolymer with density of 0.935 g/cm3, and a melt index (I2) of 1 (190°C/16 kg). Heterogeneously branched linear.

EO 45G: linear low density ethylene/octene copolymer with a density of 0.920 g/cm3, and a melt index (I2) of 1 (190°C/16 kg). Heterogeneously branched linear.

AMPACET 10090: 5% Erucamide in LDPE.

AMPACET 100329: 5% Erucamide in mLLDPE.

AMPACET 100342: 20% anti-block in mLLDPE.

AMPACET 100450: 20% additive in LDPE.

POLOXAMER 182: HO(CH2CH20)x(CCH3HCH20)y(CH2CH20)zH; x = 8, y = 30, z = 8 (available from The Dow Chemical Company).

**Two-layered Films**

*Film Preparations*

Co-extruded blown films with a "50.8 µm (2 mils)" total thickness, and having an "A/B" structure, were produced using a Collins Blown Film line. The configuration of each blown film, and the composition of each film layer, are shown in Table 6. Each film was made on a three co-axial extrusion line. For a "two layer" film, the core and external extrusion layer (inside extruder) was set to run with the same material (for Layer B), and an outside extruder was used to extrude the seal layer (Layer A). In the case below, the two layer film "A/B" configuration' was made using three extruders, making an A/B configuration (where Layer B was formed from two extrusion layers of the same composition), where the two extruder (core and inside) were run using the same material. The flow rate of each machine was used to control the inter-layer thickness of the film. The total film thickness was set by the die gap, and the haul-off speed. In this set of experiments, the total film thickness was 50.8 µm (2 mils), and the seal layer (Layer A), fed by the outside extruder, was fed at 20% of the mass flow rate, giving rise to an estimated layer thickness of 10.2 µm (0.4 mils).

Table 6

| | Control 1 | Control 2 | Example 1 | Example 2 |
|---|---|---|---|---|
| LAYER A (weight % of flow rate for outside extruder) | 20% | 20% | 20% | 20% |
| Ingredients | | | | |
| EO 81G, wt% | 100 | | | |
| EO 80G, wt% | | 97.25 | 95.95 | 97.2 |
| AMPACET 100329, wt% | | 1.5 | 1.5 | 1.5 |
| POLOXAMER 182, wt% | | | 0.05 | 0.05 |
| AMPACET 100342, wt% | | 1.25 | 2.5 | 1.25 |
| LAYER B (weight % of flow rate for both extruder inside layer and core) | 80 | 80 | 80 | 80 |
| EO 68G, wt% | 98 | 98 | 98 | 98 |

(continued)

| | Control 1 | Control 2 | Example 1 | Example 2 |
|---|---|---|---|---|
| AMPACET 100342, wt% | 1 | 1 | 1 | 1 |
| AMPACET 10090, wt% | 1 | 1 | 1 | 1 |
| Film Thickness μm (mils) | 50.8 (2) | 50.8 (2) | 50.8 (2) | 50.8 (2) |

Films were prepared using the following processing conditions as shown in Tables 7 and 8.

Table 7

| Sample | Die Gap | BUR | Thickness | Extruder 30 (Core) | | | | |
|---|---|---|---|---|---|---|---|---|
| | | | | Melt Temp | Pressure | Motor-Current | Throughput | Screw Speed |
| | | | μm (mils) | °C | MPa (bar) | Amps | kg/hr | rpms |
| Control 1 | 2 | 2.5 | 50.8 (2) | 220 | 33.3 (333) | 6.6 | 6 | 70 |
| Control 2 | 2 | 2.5 | 50.8 (2) | 224 | 33.2 (332) | 6.6 | 5.9 | 70 |
| Example 1 | 2 | 2.5 | 50.8 (2) | 220 | 33.4 (334) | 6.6 | 5.9 | 70 |
| Example 2 | 2 | 2.5 | 50.8 (2) | 220 | 33.2 (332) | 6.4 | 5.8 | 70 |

Table 8

| Sample | Pressure | Motor-Current | Throughput | | Takeoff | Blower | Total Throughput |
|---|---|---|---|---|---|---|---|
| | (MPa) ((bar)) | A | kg/hr | rpms | m/min | % | (kg/hr) |
| Control 1 | 13.1 (131) | 2.6 | 1.6 | 33 | 6 | 52 | 7.7 |
| Control 2 | 12.6 (126) | 2.7 | 1.6 | 33 | 6 | 52 | 7.6 |
| Example 1 | 12.6 (126) | 2.7 | 1.6 | 33 | 5.8 | 55 | 7.6 |
| Example 2 | 12.5 (125) | 2.7 | 1.6 | 33 | 5.7 | 55 | 7.5 |

"Off-Line" COF Testing

The kinetic coefficient of friction values were obtained for the films prepared from the formulations of Table 6, in accordance to the ASTM D1894 standard for Coefficient of Friction determination for films. The COF determination employed a TMI direct drive monitor slip and friction tester. The kinetic Coefficient of Friction results for these films are shown in Table 9.

Table 9

| | Control 1 | Control 2 | Example 1 | Example 2 |
|---|---|---|---|---|
| Offline COF - 14 days | | | | |
| Seal/Metal | 0.26 | 0.25 | 0.22 | 0.22 |
| Seal/Seal | 0.13 | 0.52 | 0.11 | Not Measured |

In Table 9, the seal layer is layer A, as described in Table 6. The "off-line" kinetic Coefficient of Friction was measured for two conditions. For the first condition, the COF was determined from a metal surface (block) sliding across the surface of the seal layer (Layer A) of the film. This is termed the "seal/metal COF" in Table 9. For the second condition, the COF was measured by attaching the seal layer (Layer A) to the block, and sliding the block across the surface of the seal layer (layer A) of another film. This is termed the "seal/seal COF" in Table 9. The film configuration of Example 1 showed a reduction in COF for both the "seal/metal" COF and the "seal/seal" COF, as compared to Control 1 and Control 2.

*"At-Line" COF Testing*

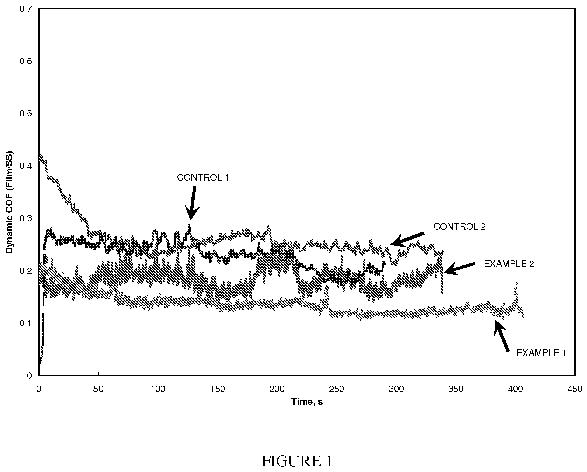

The "at-line" dynamic COF testing was also performed for the rolls of films prepared from the formulations as described in Table 6, using a designed apparatus as described in International Application No. PCT/US2010/045117 (WO Publication #2011/019787). The dynamic COF test was performed using a stainless steel, static (non-rotating) roller surface. The film roll was mounted on the slitter/rewinder, and the web was threaded through the "at-line" COF testing apparatus, and back to the slitter/rewinder drive roller. The film web motion was controlled using the slitter/rewinder control system, located at the web entrance. The wrap angle ($\theta$) was 0.52 radians. The dynamic coefficient of friction was tested at a web linear speed of 15.2 metres (50 feet) per minute. The dynamic COF of the film to the stainless steel surface was then determined using the Amonton's law, through the measurement of the web tension. The dynamic COF for the full roll of film was recorded, and is shown in the Figure 1. The dynamic COF, as measured using the "at-line" COF tester, showed that the inventive films gave an overall lower dynamic coefficient of friction, indicating a higher slip of the film to the metal surface (in this case, a stainless steel surface). Also, the higher amount of antiblocking agent used in Example 1, gave a better COF consistency across the length of the roll of film, as compared to the COF profile of Example 2.

**Three-Layered Films**

*Film Preparations (Non-laminated films):*

Co-extruded three layer blown films with a total thickness of 50.8 $\mu$m (2 mil) (A/C/B film configuration) were produced on an Alpine seven layer line, with layer ratios of 20, 60 and 20 percent for the Layers A, C and B, respectively, based on the total film thickness. The composition of each film layer, is shown in Table 10. The films were produced so that "extrusion layer 7" of the seven layer film represented the sealant Layer A, and was run on the inside of the bubble. The extrusion layers 2, 3, 4, 5 and 6 of the seven extrusion layer film represented the core Layer C, and thus, Layer C was formed from five extrusion layers of the same composition. The "extrusion layer 1" of the seven layer film represented the other skin layer (Layer B), and was run on the outside of the bubble. Layer B was also corona treated with a minimum treatment level of 0.42 mN (42 dynes).

The flow rate of each extruder was used to control each layer thickness of the film. The total film thickness was set by the die gap and the haul-off speed. The films were prepared using the following processing conditions as shown in Table 11. Each film thickness was 50.8 $\mu$m (2 mils).

Table 10

|  | Control 3 | Comparative Example 3 | Comparative Example 4 | Example 5 | Example 6 |
|---|---|---|---|---|---|
| LAYER A (Thickness) | 20% | 20% | 20% | 20% | 20% |
| EO 45G wt% | 99.7187 | 99.6687 | 99.6337 | 99.6687 | 99.6337 |
| Erucamide, wt% | 0.0313 | 0.0313 | 0.0313 | 0.0313 | 0.0313 |
| CARBOWAX PEG 8000* wt% |  | 0.05 | 0.085 |  |  |
| POLOXAMER 182, wt% |  |  |  | 0.05 | 0.085 |
| SiO2, wt% | 0.25 | 0.25 | 0.25 | 0.25 | 0.25 |
| Total | 100 | 100 | 100 | 100 | 100 |
| LAYER C (Thickness) | 60% | 60% | 60% | 60% | 60% |
| DOWLEX 2045G | 99.9687 | 99.9687 | 99.8837 | 99.9687 | 99.8837 |
| Erucamide (wt%) | 0.0313 | 0.0313 | 0.0313 | 0.0313 | 0.0313 |
| CARBOWAX PEG 8000* wt% |  |  | 0.085 |  |  |
| POLOXAMER 182, wt% |  |  |  |  | 0.085 |
| Total | 100 | 100 | 100 | 100 | 100 |
| LAYER B (Thickness) | 20% | 20% | 20% | 20% | 20% |
| EO 45G wt% | 99.8 | 99.8 | 99.8 | 99.8 | 99.8 |
| SiO2 (%) | 0.2 | 0.2 | 0.2 | 0.2 | 0.2 |

(continued)

|  | Control 3 | Comparative Example 3 | Comparative Example 4 | Example 5 | Example 6 |
|---|---|---|---|---|---|
| Total | 100 | 100 | 100 | 100 | 100 |

\* EOx where x is about 180.

Table 11: Process Conditions for Three Layer Films Produced on Alpine 7 Layer Line

|  | Layer 1 | Layer 2 | Layer 3 | Layer 4 | Layer 5 | Layer 6 | Layer 7 |
|---|---|---|---|---|---|---|---|
| Layer % | 20 | 12 | 12 | 12 | 12 | 12 | 20 |
| Output (kg/hr) ((lbs/hr)) | 32 (70) | 19 (42) | 19 (42) | 19 (42) | 19 (42) | 19 (42) | 32 (70) |
| Screw speed (rpm) | 49.7 | 26.3 | 26.4 | 26.2 | 26.5 | 26.5 | 45.6 |
| Melt Temp. (°C) ((°F)) | 242 (467) | 239 (461.7) | 246 (474.7) | 228 (443.2) | 227 (441.3) | 244 (471.4) | 238 (461.1) |
| Melt pressure (MPa) ((psi)) | 39.2 (5596) | 30.0 (4281) | 32.3 (4613) | 28.5 (4074) | 28.9 (4134) | 31.0 (4429) | 41.8 (5975) |
| Temp. Profile (°C) ((°F)) |  |  |  |  |  |  |  |
| Zone 1 (Grooves) | 27 (80) | 27 (80) | 27 (80) | 27 (80) | 27 (80) | 27 (80) | 27 (80) |
| Zone 2 | 193 (380) | 193 (380) | 193 (380) | 193 (380) | 193 (380) | 193 (380) | 193 (380) |
| Zone 3 | 193 (380) | 193 (380) | 193 (380) | 193 (380) | 193 (380) | 193 (380) | 193 (380) |
| Zone 4 | 193 (380) | 193 (380) | 193 (380) | 193 (380) | 193 (380) | 193 (380) | 193 (380) |
| Zone 5 | 193 (380) | 193 (380) | 193 (380) | 193 (380) | 193 (380) | 193 (380) | 193 (380) |
| Zone 6 | 232 (450) | 232 (450) | 232 (450) | 232 (450) | 232 (450) | 232 (450) | 232 (450) |
| Zone 7 | 232 (450) | 232 (450) | 232 (450) | 232 (450) | 232 (450) | 232 (450) | 232 (450) |
| Zone 8 | 232 (450) | 232 (450) | 232 (450) | 232 (450) | 232 (450) | 232 (450) | 232 (450) |

Die size = 250 mm (10 inches); Die gap = 2 mm (78 mil); Blow up ratio = 1.8; Drawdown ratio = 21.8; Overall throughput = 159 kg/hr (350 lbs/hr); Layflat width = 72.1 cm (28.4 inch)

*Adhesive Lamination (Laminated films):*

The films as shown in Table 10 were adhesively laminated to "12 micrometer" ("48 gauge") biaxially oriented PET film (substrate) on an EGAN adhesive lamination line. The adhesive lamination was done using a two component, adhesive system, ADCOTE 577A and ADCOTE 577B, available from Rohm and Haas (now The Dow Chemical Company). The adhesive was applied to the biaxially oriented PET film using a direct gravure process (adhesive coat weight from 0.79 to 0.82 kgs (1.75 to 1.8 lbs)/ream; temperature of the heating zones for evaporating the solvent was 77°C (170°F) and 82°C (180°F) respectively).

*"Off-line" COF Testing for Non-Laminated and Laminated Films*

The "off-line" kinetic COF was measured for "sealant-to-sealant" layer of films before lamination. The COF was determined by wrapping the laminated film around a metal block, such that the film surface is exposed. This block was slid across the surface of the sealant layer (layer A) of a second laminated film attached to a slide. During the COF measurement, the sealant layer of the laminated film, wrapped around the block, was always in contact with the sealant layer of the laminated film on the slide. These measurements were repeated over multiple days as reported in Tables 12-15.

In Table 12, the "off-line" COF measurements are given for the following films: Control 3, Comparative Example 3, and Example 5 (inventive), before each film was laminated. In Table 12, the sealant layer is layer A, as described in Table 10. It can be seen that the "off-line" COF of the film of Example 5 was significantly lower than that of the Control 3 film and the Comparative Example 3 film.

TABLE 12: Off-Line sealant-to-sealant kinetic COF before Lamination for films Control 3, Comparative Example 3 and Example 5

| Age of film (Days) | Control 3 | Comparative Example 3 | Example 5 |
|---|---|---|---|
| 12 | 0.478 | 0.382 | 0.182 |
| 28 | 0.388 | 0.346 | 0.198 |
| 60 | 0.392 | 0.351 | 0.239 |

In Table 13, the "off-line" COF measurements are given for the following films: Control 3, Comparative Example 3 and Example 5, after lamination. In Table 13, the sealant layer is layer A, as described in Table 10. It can be seen that the "off-line" COF of the film of Example 5 was significantly lower than that of the Control 3 film and the Comparative Example 3 film, even after lamination.

TABLE 13: Off-Line sealant-to-sealant kinetic COF after Lamination for films Control 3, Comparative Example 3 and Example 5

| Age of film (Days) | Control 3 | Comparative Example 3 | Example 5 |
|---|---|---|---|
| 19 | 0.512 | 0.504 | 0.434 |
| 35 | 0.505 | 0.462 | 0.446 |
| 64 | 0.469 | 0.432 | 0.428 |

In Table 14, the "off-line" COF measurements are given for the following films; Control 3, Comparative Example 4, and Example 6, before lamination. In Table 14, the sealant layer is layer A, as described in Table 10. It can be seen that the "off-line" COF of the Example 6 was significantly lower than that of the Control 3 and the Comparative Example 4.

TABLE 14: Off-Line sealant-to-sealant kinetic COF before Lamination for films Control 3, Comparative Example 4 and Example 6

| Age of film (Days) | Control3 | Comparative Example 4 | Example 6 |
|---|---|---|---|
| 12 | 0.478 | 0.405 | 0.225 |
| 28 | 0.388 | 0.356 | 0.215 |
| 60 | 0.392 | 0.370 | 0.216 |

In Table 15, the "off-line" COF measurements are given for the following films; Control 3, Comparative Example 4, and Example 6, each after lamination. In Table 15, the sealant layer is layer A, as described in Table 10. It can be seen that the off-line COF of the Example 6 was significantly lower than that of the Control 3 and the Comparative Example 4, even after lamination.

Table 15: Off-Line sealant-to-sealant kinetic COF after

| Lamination for films Control 3, Comparative Example 4 and Example 6 | | | |
|---|---|---|---|
| Age of film (Days) | Control3 | Comparative Example 4 | Example 6 |
| 19 | 0.512 | 0.444 | 0.439 |

(continued)

| Lamination for films Control 3, Comparative Example 4 and Example 6 | | | |
|---|---|---|---|
| Age of film (Days) | Control3 | Comparative Example 4 | Example 6 |
| 35 | 0.505 | 0.464 | 0.403 |
| 64 | 0.469 | 0.424 | 0.407 |

*"At-line" COF Testing for Laminated Films*

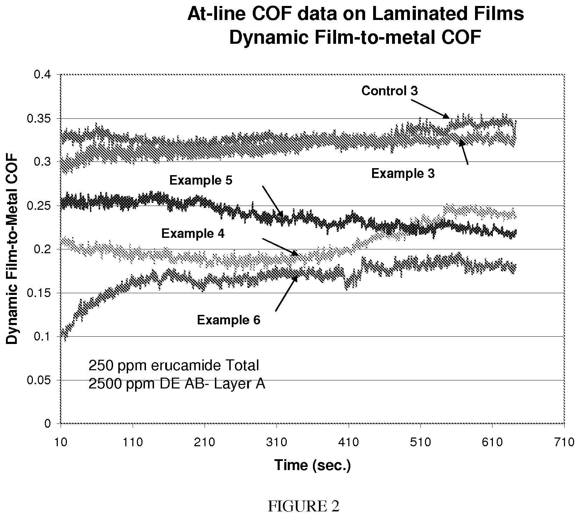

The "at-line" dynamic COF testing was also performed for the laminated films, discussed above, using the designed apparatus (Figure 2), as described in International Application No. PCT/US2010/045117 (WO Publication #2011/019787). The dynamic COF test was performed using a stainless steel, static (non-rotating) roller surface, where the sealant layer A (described in Table 10) was always in contact with the stainless steel surface. The film roll was mounted on the slitter/rewinder, and the web was threaded through the at-line COF testing apparatus, and back to the slitter/rewinder drive roller. The film web motion was controlled using the slitter/rewinder control system, located at the web entrance. The wrap angle ($\theta$) was 0.52 radians. The dynamic coefficient of friction was tested at a web linear speed of 15.2 metres (50 feet) per minute. The dynamic COF of the film to the stainless steel surface was then determined using the Amonton's law through the measurement of the web tension. The dynamic sealant-to-metal COF for the full roll of film was recorded for films Control 3, Comparative Examples 3 and 4, and Examples 5 and 6 (Inventive), and is shown in the Figure 2. The dynamic "sealant-to-metal" COF, measured using the "at-line" COF tester, was lower for Example 5 as compared to the control 3 and Comparative Example 3. The dynamic "sealant-to-metal" was also lower for films Example 6 as compared to the control 3 and Comparative Example 4.

As discussed above, for laminated films that are converted on a vertical, form, fill and seal (VFFS) type machines, there is a need to maintain low COF on the sealant side of the film for good performance on the VFFS machine. Many of such sealant films are adhesively laminated to a biaxially oriented polyester substrate or a biaxially oriented polypropylene substrate, and it is important to maintain low COF on the sealant side of such laminated films. The inventive films described herein give lower COF, as compared to the control films and respective comparative examples described herein. The low COF was observed for the inventive films, both before and after, going through the adhesive lamination process, and this low COF is important for optimizing the processability of these films on VFFS machines.

**Claims**

1. A film comprising at least two layers, Layer A and Layer B, and wherein Layer A is formed from a Composition A comprising the following:

   i) an olefin-based polymer,
   ii) at least one polyalkylene-oxide selected from the group consisting of the following:

   a) EOxPOyEOz, where x is from 1 to 50; y is from 1 to 100; and z is from 1 to 50;
   b) POxEOyPOz, where x is from 1 to 100; y is from 1 to 50; and z is from 1 to 100; and
   c) combinations thereof, wherein EO represents ethylene oxide and PO represents propylene oxide; and

   wherein the Layer B is formed from Composition B comprising an olefin-based polymer.

2. The film of Claim 1, wherein Composition A further comprises an amide.

3. The film of Claim 2, wherein the amide is selected from the group consisting of the following:

   (1) Primary Amides: $R_1$-CO-NH$_2$, where $R_1$=C$_x$H$_y$, where x = 8-30 and y = 15-61;
   (2) Secondary Amides: $R_1$-CO-NH-$R_2$, where $R_1$ and $R_2$ = C$_x$H$_y$, where x = 8-30 and y = 15-61;
   (3) Ethylene Bis-Amides: $R_1$-CO-NH-CH$_2$-CH$_2$-$R_2$ where $R_1$ and $R_2$ = C$_x$H$_y$, where x = 8-30 and y = 15-61; and
   (4) combinations thereof.

4. The film of any of the previous claims, wherein the polyalkylene-oxide of Component ii) has a molar ratio of "PO groups" to "EO groups" from 1 to 15.

**5.** The film of any of the previous claims, wherein the olefin-based polymer of Component i) is an ethylene-based polymer.

**6.** The film of Claim 5, wherein the ethylene-based polymer has a density from 0.85 g/cc to 0.94 g/cc.

**7.** The film of Claim 5 or Claim 6, wherein the ethylene-based polymer has a melt index (I2) from 0.05 to 50 g/10 min.

**8.** The film of any of Claims 5-7, wherein the ethylene-based polymer is a heterogeneously branched ethylene/$\alpha$-olefin interpolymer.

**9.** The film of any of the previous claims, wherein the olefin-based polymer of Composition B is an ethylene-based polymer.

**10.** The film of Claim 9, wherein the ethylene-based polymer has a density from 0.85 g/cc to 0.94 g/cc.

**11.** The film of Claim 9 or Claim 10, wherein the ethylene-based polymer has a melt index (I2) from 0.05 to 50 g/10 min.

**12.** The film of any of the previous claims, wherein Composition B does not comprise at least one polyalkylene-oxide selected from the group consisting of the following:

a) EOxPOyEOz, where x is from 1 to 50; y is from 1 to 100; and z is from 1 to 50;
b) POxEOyPOz, where x is from 1 to 100; y is from 1 to 50; and z is from 1 to 100;
c) EOxPOy, where x is from 1 to 50; and y is from 1 to 100; and
d) combinations thereof; and

**13.** The film of any of the previous claims, wherein the polyalkylene-oxide of Component ii) is present in an amount from 1 ppm to 5000 ppm, based on the weight of Composition A.

**14.** An article comprising at least one component formed from the film of any of the previous claims.

**Patentansprüche**

**1.** Eine Folie, beinhaltend mindestens zwei Schichten, Schicht A und Schicht B, und wobei Schicht A aus einer Zusammensetzung A gebildet ist, die Folgendes beinhaltet:

i) ein auf Olefin basierendes Polymer,
ii) mindestens ein Polyalkylenoxid, ausgewählt aus der Gruppe, die aus Folgendem besteht:

a) EOxPOyEOz, wobei x von 1 bis 50 reicht; y von 1 bis 100 reicht; und z von 1 bis 50 reicht;
b) POxEOyPOz, wobei x von 1 bis 100 reicht; y von 1 bis 50 reicht; und z von 1 bis 100 reicht; und
c) Kombinationen davon, wobei EO Ethylenoxid darstellt und PO Propylenoxid darstellt; und

wobei Schicht B aus einer Zusammensetzung B gebildet ist, die ein auf Olefin basierendes Polymer beinhaltet.

**2.** Folie gemäß Anspruch 1, wobei Zusammensetzung A ferner ein Amid beinhaltet.

**3.** Folie gemäß Anspruch 2, wobei das Amid aus der Gruppe ausgewählt ist, die aus Folgendem besteht:

(1) primären Amiden: $R_1$-CO-$NH_2$, wobei $R_1$ = $C_xH_y$, wobei x = 8-30 und y = 15-61;
(2) sekundären Amiden: $R_1$-CO-NH-$R_2$, wobei $R_1$ und $R_2$ = $C_xH_y$, wobei x = 8-30 und y = 15-61;
(3) Ethylendiamiden: $R_1$-CO-NH-$CH_2$-$CH_2$-$R_2$, wobei $R_1$ und $R_2$ = $C_xH_y$, wobei x = 8-30 und y = 15-61; und
(4) Kombinationen davon.

**4.** Folie gemäß einem der vorhergehenden Ansprüche, wobei das Polyalkylenoxid von Komponente ii) ein Molverhältnis von "PO-Gruppen" zu "EO-Gruppen" von 1 bis 15 aufweist.

**5.** Folie gemäß einem der vorhergehenden Ansprüche, wobei das auf Olefin basierende Polymer von Komponente i) ein auf Ethylen basierendes Polymer ist.

6. Folie gemäß Anspruch 5, wobei das auf Ethylen basierende Polymer eine Dichte von 0,85 g/cm$^3$ bis 0,94 g/cm$^3$ aufweist.

7. Folie gemäß Anspruch 5 oder Anspruch 6, wobei das auf Ethylen basierende Polymer einen Schmelzindex (12) von 0,05 bis 50 g/10 min aufweist.

8. Folie gemäß einem der Ansprüche 5-7, wobei das auf Ethylen basierende Polymer ein heterogen verzweigtes Ethylen/a-Olefin-Mischpolymer ist.

9. Folie gemäß einem der vorhergehenden Ansprüche, wobei das auf Olefin basierende Polymer von Zusammensetzung B ein auf Ethylen basierendes Polymer ist.

10. Folie gemäß Anspruch 9, wobei das auf Ethylen basierende Polymer eine Dichte von 0,85 g/cm$^3$ bis 0,94 g/cm$^3$ aufweist.

11. Folie gemäß Anspruch 9 oder Anspruch 10, wobei das auf Ethylen basierende Polymer einen Schmelzindex (12) von 0,05 bis 50 g/10 min aufweist.

12. Folie gemäß einem der vorhergehenden Ansprüche, wobei Zusammensetzung B nicht mindestens ein Polyalkylenoxid, ausgewählt aus der Gruppe, die aus Folgendem besteht, beinhaltet:

   a) EOxPOyEOz, wobei x von 1 bis 50 reicht; y von 1 bis 100 reicht; und z von 1 bis 50 reicht;
   b) POxEOyPOz, wobei x von 1 bis 100 reicht; y von 1 bis 50 reicht; und z von 1 bis 100 reicht;
   c) EOxPOy, wobei x von 1 bis 50 reicht; und y von 1 bis 100 reicht; und
   d) Kombinationen davon; und

13. Folie gemäß einem der vorhergehenden Ansprüche, wobei das Polyalkylenoxid von Komponente ii) in einer Menge von 1 ppm bis 5000 ppm, bezogen auf das Gewicht von Komponente A, vorhanden ist.

14. Ein Artikel, beinhaltend mindestens eine Komponente, die aus der Folie gemäß einem der vorhergehenden Ansprüche gebildet ist.

**Revendications**

1. Un film comprenant au moins deux couches, Couche A et Couche B, et dans lequel la Couche A est formée à partir d'une Composition A comprenant ce qui suit :

   i) un polymère à base d'oléfine,
   ii) au moins un poly(oxyde d'alkylène) sélectionné dans le groupe constitué de ce qui suit :

   a) EOxPOyEOz, où x va de 1 à 50 ; y va de 1 à 100 ; et z va de 1 à 50 ;
   b) POxEOyPOz, où x va de 1 à 100 ; y va de 1 à 50 ; et z va de 1 à 100 ; et
   c) des combinaisons de ceux-ci, dans lequel EO représente un oxyde d'éthylène et PO représente un oxyde de propylène; et

   dans lequel la Couche B est formée à partir de la Composition B comprenant un polymère à base d'oléfine.

2. Le film de la revendication 1, dans lequel la Composition A comprend en outre un amide.

3. Le film de la revendication 2, dans lequel l'amide est sélectionné dans le groupe constitué de ce qui suit :

   (1) des amides primaires : $R_1$-CO-NH$_2$, où $R_1$ = $C_xH_y$, où x = 8 à 30 et y = 15 à 61 ;
   (2) des amides secondaires : $R_1$-CO-NH-$R_2$, où $R_1$ et $R_2$ = $C_xH_y$, où x = 8 à 30 et y=15à61 ;
   (3) des bis-amides d'éthylène : $R_1$-CO-NH-CH$_2$-CH$_2$-$R_2$ où $R_1$ et $R_2$= $C_xH_y$, où x = 8 à 30 et y = 15 à 61 ; et
   (4) des combinaisons de ceux-ci.

4.  Le film de n'importe lesquelles des revendications précédentes, dans lequel l'oxyde de polyalkylène de Constituant ii) a un rapport molaire des « groupes PO » aux « groupes EO » allant de 1 à 15.

5.  Le film de n'importe lesquelles des revendications précédentes, dans lequel le polymère à base d'oléfine de Constituant i) est un polymère à base d'éthylène.

6.  Le film de la revendication 5, dans lequel le polymère à base d'éthylène a une masse volumique allant de 0,85 g/cm$^3$ à 0,94 g/cm$^3$.

7.  Le film de la revendication 5 ou de la revendication 6, dans lequel le polymère à base d'éthylène a un indice de fluidité à l'état fondu (I2) allant de 0,05 à 50 g/10 min.

8.  Le film de n'importe lesquelles des revendications 5 à 7, dans lequel le polymère à base d'éthylène est un interpolymère d'éthylène/$\alpha$-oléfine ramifié de manière hétérogène.

9.  Le film de n'importe lesquelles des revendications précédentes, dans lequel le polymère à base d'oléfine de Composition B est un polymère à base d'éthylène.

10. Le film de la revendication 9, dans lequel le polymère à base d'éthylène a une masse volumique allant de 0,85 g/cm$^3$ à 0,94 g/cm$^3$.

11. Le film de la revendication 9 ou de la revendication 10, dans lequel le polymère à base d'éthylène a un indice de fluidité à l'état fondu (12) de 0,05 à 50 g/10 min.

12. Le film de n'importe lesquelles des revendications précédentes, dans lequel la Composition B ne comprend pas au moins un oxyde de polyalkylène sélectionné dans le groupe constitué de ce qui suit :

    a) EOxPOyEOz, où x va de 1 à 50 ; y va de 1 à 100 ; et z va de 1 à 50 ;
    b) POxEOyPOz, où x va de 1 à 100 ; y va de 1 à 50 ; et z va de 1 à 100 ;
    c) EOxPOy, où x va de 1 à 50 ; et y va de 1 à 100 ; et
    d) des combinaisons de ceux-ci ; et

13. Le film de n'importe lesquelles des revendications précédentes, dans lequel l'oxyde de polyalkylène de Constituant ii) est présent en une quantité allant de 1 ppm à 5 000 ppm, rapporté au poids de la Composition A.

14. Un article comprenant au moins un constituant formé à partir du film de n'importe lesquelles des revendications précédentes.

FIGURE 1

**At-line COF data on Laminated Films
Dynamic Film-to-metal COF**

FIGURE 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6503637 B
- EP 95299 A
- EP 0526117 A1
- US 4533509 A
- US 20050070644 A
- US 4551509 A
- US 2978431 A
- US 3645992 A, Elston
- EP 0129368 A
- EP 0260999 A
- US 4701432 A
- US 4937301 A
- US 4935397 A
- US 5055438 A
- WO 9007526 A
- US 5272236 A
- US 5278272 A
- US 6054544 A
- US 6335410 B
- US 6723810 B
- US 4076698 A, Anderson
- US 6680361 B
- WO 0026268 A
- US 3456044 A, Pahlke
- US 4352849 A, Mueller
- US 4820557 A
- US 4837084 A, Warren
- US 4865902 A, Golike
- US 4927708 A, Herran
- US 4952451 A, Mueller
- US 4963419 A
- US 5059481 A, Lustig
- US 2010045117 W
- WO 2011019787 A

### Non-patent literature cited in the description

- **RANDALL.** *Rev. Macromol. Chem. Phys.,* 1989, vol. C29 (2 &3), 285-297
- **ZIMM, B.H. ; STOCKMAYER, W.H.** J. Chem. Phys. 1949, vol. 17, 1301
- **RUDIN, A.** Modern Methods of Polymer Characterization. John Wiley & Sons, 1991, 103-112
- **KIRK-OTHMER.** The Encyclopedia of Chemical Technology. John Wiley & Sons, 1981, vol. 16, 416-417
- THE ENCYCLOPEDIA OF CHEMICAL TECHNOLOGY. vol. 18, 191-192
- **WILLIAMS ; WARD.** J. Polym. Sci. *Polym. Let.,* 1968, vol. 6, 621
- Chromatography Polym. Mourey and Balke, 1992
- **BALKE ; THITIRATSAKUL ; LEW ; CHEUNG ; MOUREY.** Chromatography Polym. 1992
- J. Chem. Phys. Zimm, B.H, 1948, vol. 16, 1099
- **KRATOCHVIL, P.** Classical Light Scattering from Polymer Solutions. Elsevier, 1987
- **YAU ; GILLESPIE.** *Polymer,* 2001, vol. 42, 8947-8958